# EUROPÄISCHE PATENTANMELDUNG

(11) **EP 0 942 559 A1**
(43) Veröffentlichungstag der Anmeldung: **15.09.1999**
(21) Anmeldenummer: 99440033.1
(22) Anmeldetag: 19.02.1999
(51) Int. Cl.: H04L 12/58, H04Q 3/00, H04M 3/42

(54) **Verfahren zur Übermittlung von Zustandsdaten, Server-Rechner und Dienststeuereinheit**

(30) Priorität: 09.03.1998 DE 19809799
(71) Anmelder: ALCATEL, 75008 Paris (FR)
(72) Erfinder: Lautenschlager, Wolfgang, 71287 Weissach-Flacht (DE); Stahl, Uwe, 71229 Leonberg (DE)
(74) Vertreter: Zinsinger, Norbert

(57) **Zusammenfassung**

Die Erfindung betrifft ein Verfahren zur Übermittlung von Zustandsdaten eines Anwendungsprogramms, das von einem Server-Rechner (SERV1) eines Rechnernetzes ausgeführt wird, sowie einen Server-Rechner (SERV1) und Dienststeuereinheit (SCP) eines Fernsprechnetzes. Diejenigen Zustandsdaten des Anwendungsprogramms, die gemäß einer Zuordnung einem bestimmten Teilnehmer (A) des Fernsprechnetzes zugeordnet sind, werden ermittelt . Eine Nachricht (STATM) mit den ermittelten Zustandsdaten wird von dem Server-Rechner (SERV1) des Rechnernetzes an die Dienststeuereinheit (SCP) des Fernsprechnetzes gesendet. Die Dienststeuereinheit (SCP) veranlaßt sodann das Senden einer Meldung (ANN) mit den Zustandsdaten über das Fernsprechnetz an ein dem bestimmten Teilnehmer (A) im Fernsprechnetz zugeordnetes Fernsprechendgerät (TE).

## Beschreibung

Die Erfindung betrifft ein Verfahren zur Übermittlung von Zustandsdaten eines Anwendungsprogramms nach dem Oberbegriff von Anspruch 1, einen Server-Rechner nach dem Oberbegriff von Anspruch 11 und eine Dienststeuereinheit nach dem Oberbegriff von Anspruch 13.

Die Erfindung geht von der üblichen Übermittlung von Zustandsdaten von Internet-Aplikationen aus.

Ein Anwendungsprogramm, das beispielsweise einen Email Dienst für eine Gruppe von Teilnehmern bereitstellt, wird von einem Server-Rechner des Internets ausgeführt. Wenn nun einer dieser Teilnehmer Zustandsdaten dieses Anwendungsprogramms abfragen will, so wird der Aufbau einer Verbindung zwischen einem mit einem entsprechendend Client-Anwendungsprogramm ausgestatteten Client-Rechner des Teilnehmer und dem Server-Rechnern über das Internet notwendig: Der Computer baut über ein Zugangsnetz, beispielsweise ein Fernsprechnetz, eine Verbindung zu einem Gateway-Rechner auf, der ihm den Zugang zum Internet ermöglicht.

Die Kommunikation zwischen dem Client-Rechner und dem Server-Rechner erfolgt hierbei über den im Internet üblichen TCP/ IP Protokoll-Stack (Transmission Control Protocol/ Internet Protocol). Über das Internet werden sodann von auf dem Server-Rechners ablaufenden Server-Anwendungsprogramm Zustandsdaten, beispielsweise ob neue Email Nachrichten für den Teilnehmer eingetroffen sind, an das auf dem Client-Rechner ablaufenden Client-Anwendungsprogramm gesendet und anschließend von dem Client-Anwendungsprogramm an den Teilnehmer ausgegeben.

Ein Nachteil diese Übermittlungsverfahrens besteht darin, daß es für den Teilnehmer meist mit einem hohen Zeitaufwand verbunden ist: Um die Zustandsinformation des Anwendungsprogramms zu erhalten, muß er seinen Client-Rechner booten, das Client-Anwendungsprogramm starten und eine Verbindung ins Internet Aufbauen.

Der Erfindung liegt nun die Aufgabe zugrunde, die Übermittlung von Zustandsdaten von auf einem Server-Rechner eines Rechnernetzes ablaufenden Anwendungsprogrammen zu beschleunigen.

Diese Aufgabe wird gelöst durch ein Verfahren zur Übermittlung von Zustandsdaten eines Anwendungsprogramms nach der Lehre von Anspruch 1, einen Server-Rechner nach der Lehre von Anspruch 11, und eine Dienststeuereinheit nach der Lehre von Anspruch 13.

Der Erfindung liegt hierbei der Gedanke zugrunde, daß Zustandsdaten des Anwendungsprogramms von einer Dienststeuereinheit eines Fernsprechnetzes in einer Meldung über das Fernsprechnetz an ein Fernsprechendgerät des Teilnehmers gesendet werden. Dies ermöglicht eine effiziente, schnelle und kostengünstige Übermittlung der Zustandsdaten an den Teilnehmer und ein Verbindungsaufbau zwischen Client-Rechner und Server-Rechner hat nur zu erfolgen, wenn aus den Zustandsdaten ersichtlich ist, daß er sich lohnt.

Der Vorteil der Erfindung besteht darin, daß zum einen die Zustandsdaten über ein kostengünstigeres und stets empfangsbereites Endgeräte an den Teilnehmer ausgegeben werden, das beispielsweise nicht gebootet werden muß, um die Zustandsdaten zu empfangen. Ein solches Endgerät ist auch leichter, hat erheblich kleinere Abmessungen und kann damit vom Teilnehmer auf einfachere Weise mitgeführt werden. Die Erreichbarkeit eines Teilnehmers ist somit höher, der Teilnehmer ist aktueller informiert. Zum anderen entfällt für den Teilnehmer der zeit- und kostenintensive Verbindungsaufbau in das Rechnernetz. Das Endgerät muß nicht die Protokolle des Rechnernetzes verarbeiten, es kann damit weit einfacher aufgebaut sein.

Vorteilhafte Ausgestaltungen der Erfindung sind den Unteransprüchen zu entnehmen.

Im folgenden wir die Erfindung anhand zweier Ausführungsbeispiele unter Zuhilfenahme beiliegender Zeichnungen beispielhaft erläutert.
- Fig. 1: zeigt ein Blockschaltbild eines Kommunikationssystems mit einem erfindungsgemäßen Server-Rechner und einer erfindungsgemäßen Dienststeuereinheit.
- Fig. 2: zeigt eine funktionelle Darstellung des erfindungsgemäßen Server-Rechners, der erfindungsgemäßen Dienststeuereinheit und der zwischen diesen bestehenden Kommunikationsbeziehung für ein erstes Ausführungsbeispiel.
- Fig. 3: zeigt eine funktionelle Darstellung des erfindungsgemäßen Server-Rechners, der erfindungsgemäßen Dienststeuereinheit und der zwischen diesen bestehenden Kommunikationsbeziehung für ein zweites Ausführungsbeispiel.

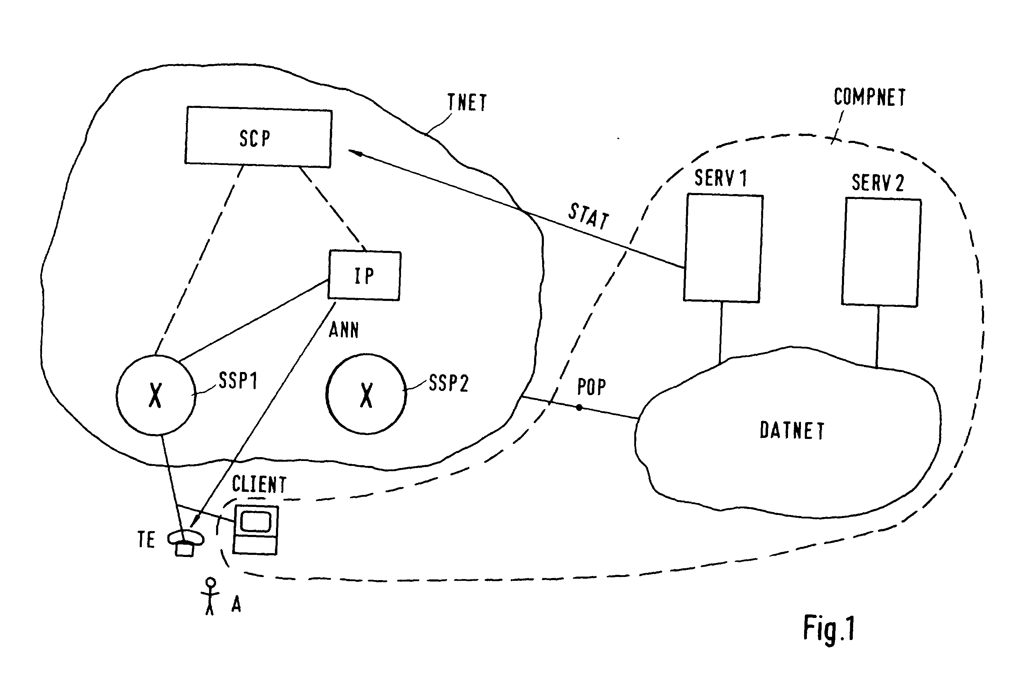

Fig. 1 zeigt ein Fernsprechnetz TNET, ein Datennetz DATNET, ein Fernsprechendgerät TE, einen Client-Rechner CLIENT und zwei Server-Rechner SERV1 und SERV2. Der Client-Rechner CLIENT und das Fernsprechendgerät TE sind einem Teilnehmer A zugeordnet.

Das Fernsprechnetz TNET ist ein ISDN-Kommunikationsnetz (ISDN = Integrated Services Digital Network). Es ist auch möglich, daß es sich bei dem Fernsprechnetz TNET um ein beliebiges Kommunikationsnetz handelt, das eine Sprach-, oder auch eine Bildkommunikation in Echtzeit erlaubt. Es kann sich somit bei dem Fernsprechnetz TNET auch um ein übliches analoges Fernsprechnetz, um ein Mobilfunknetz, beispielsweise nach dem GSM Standard (GSM = Global System for Mobile Communication), oder um ein Fernsprechnetz handeln, bei dem ein Teilnehmer über verschiedenartige Anschlußtechniken (Festnetzanschluß, Mobilfunkanschluß, Cordless-Anschluß) erreichbar ist, wie dies beispielsweise bei einem PCS System (PCS = Personal Communication System) der Fall ist. Das Fernsprechendgerät TE ist ein ISDN-Telefon. Bei dem Fernsprechendgerät TE könnte es sich aber auch um einen analoges Telefon, einen Bildfernsprecher oder um ein Handy handeln.

Das Datennetz DATNET basiert auf einem oder mehreren Paketnetzen, beispielsweise ein ATM-Netz (ATM = Asynchronous Transfer Mode), über das Rechner mittels des TCP/IP Protokoll Stacks kommunizieren. Das Daten netz DATNET wird beispielsweise vom Internet gebildet. Über den Zugangspunkt POP ist ein Zugang über eine Übertragungsstrecke des Fernsprechnetzes TNET in das Datennetz DATNET möglich.

Die Zahl der Rechner CLIENT, SERV1 und SERV2 ist beispielhaft gewählt. Der Rechner CLIENT besteht aus einem üblichen Computer, der mit einem Schnittstellenmodul zur Kommunikation über das Fernsprechnetz TNET ausgestattet ist, also über eine ISDN-Karte oder ein Modem verfügt. Die Rechner SERV1 und SERV2 bestehen jeweils aus einem leistungsfähigen Computer, der mit einer Schnittstellenkarte zur Kommunikation über das Datennetz DATNET ausgestattet ist, also beispielsweise über mindestens eine ATM Karte oder mindestens eine Frame Relay Karte verfügt. Die Rechner CLIENT, SERV1 und SERV2 kommunizieren mittels des TCP/IP Protokolls über die darunter liegenden Übertragungswege des Datennetzes DATNET und das Fernsprechnetzes TNET miteinander, das hierbei die Funktion eines Zugangsnetzes zum Datennetz DATNET einnimmt, und bilden somit mit den darunterliegenden Übertragungswegen ein Rechnernetz COMPNET.

Das Fernsprechnetz TNET weist eine Dienststeuereinheit SCP, ein Dienstunterstützungssystem IP und mehrere Vermittlungsstellen auf, von denen beispielhaft zwei besonders ausgestaltete Vermittlungsstellen SSP1 und SSP2 gezeigt sind.

Bei den Vermittlungsstellen SSP1 und SSP2 handelt es sich um Dienstvermittlungsstellen, die mit der Dienststeuereinheit SCP über das Nr. 7 Signalisierungssystem mittels des INAP -Protokolls kommunizieren (INAP = Intelligent Network Application Part). Die Dienstvermittlungsstellen SSP1 und SSP2 sowie die Dienststeuereinheit SCP enthalten hierbei jeweils eine Dienstvermittlungsfunktionalität (service switching function) bzw. eine Dienststeuerfunktionalität (service control function) gemäß der IN-Architektur (IN = Intelligent Network). Es ist natürlich auch möglich, daß die Dienststeuereinheit SCP und die Dienstvermittlungsstellen SSP1 und SSP2 über andere Protokolle miteinander kommunizieren, beispielsweise über das CAP Protokoll (CAP = Camel Application Part), wenn es sich bei dem Fernsprechnetz TNET um ein Mobilfunknetz handelt. Es ist auch möglich, daß die Funktionen der Dienststeuereinheit SCP in die Steuerung einer Vermittlungsstelle integriert sind und den im Folgenden beschriebenen Dienst für diese Vermittlungsstelle bereitstellen.

Das Dienstunterstützungssystem IP kommuniziert mit der Dienststeuereinheit SCP über das Signalisierungssystem Nr. 7 (oder DSS1) und wird von diesem gesteuert. Es generiert auf einen Steuerbefehl von der Dienststeuereinheit SCP Ansagetexte oder auch Anzeigetexte, die sie über das Fernsprechnetz TNET an ein Fernsprechendgerät des Fernsprechnetzes TNET sendet. Es ist auch möglich, daß das Dienstunterstützungssystem IP in die Dienststeuereinheit SCP integriert ist.

Von dem Server-Rechner SERV1 wird ein Anwendungsprogramm durchgeführt. Zustandsdaten des Anwendungsprogramms werden hierbei wie folgt übermittelt:

Zustandsdaten, die dem Teilnehmer A des Fernsprechnetzes TNET gemäß einer Zuordnung zuzuordnen sind, werden ermittelt und in einer Nachricht STAT an die Dienststeuereinheit SCP des Fernsprechnetzes TNET gesendet. Weiter wird das Fernsprechendgerät TE als dem Teilnehmer A zugewiesenes Fernsprechendgerät ermittelt. Bei PCS oder mobilen Teilnehmern wird dies beispielweise über ein Aufenthaltsdatenbank realisiert.

Die Übermittlung der Nachricht STAT erfolgt vorteilhafterweise über das Internet, die Dienststeuereinheit SCP verfügt somit über einen Internet-Zugang. Es ist natürlich auch möglich, daß diese Nachricht über ein anderes Übertragungsmedium, beispielsweise eine X. 25 Punkt zu Punkt Verbindung, übertragen wird.

Die Dienststeuereinheit SCP veranlaßt sodann das Dienstunterstützungssystem IP, eine Meldung ANN mit den Zustandsdaten über das Fernsprechnetz TNET an das Endgerät TE zu senden. Die Meldung ANN wird hierbei als Sprachnachricht über eine Sprachkanal, beispielsweise über einen ISDN B-Kanal, oder als Anzeigetext, beispielsweise über einen ISDN D-Kanal durch das Fernsprechnetz TNET an das Endgerät TE übertragen.

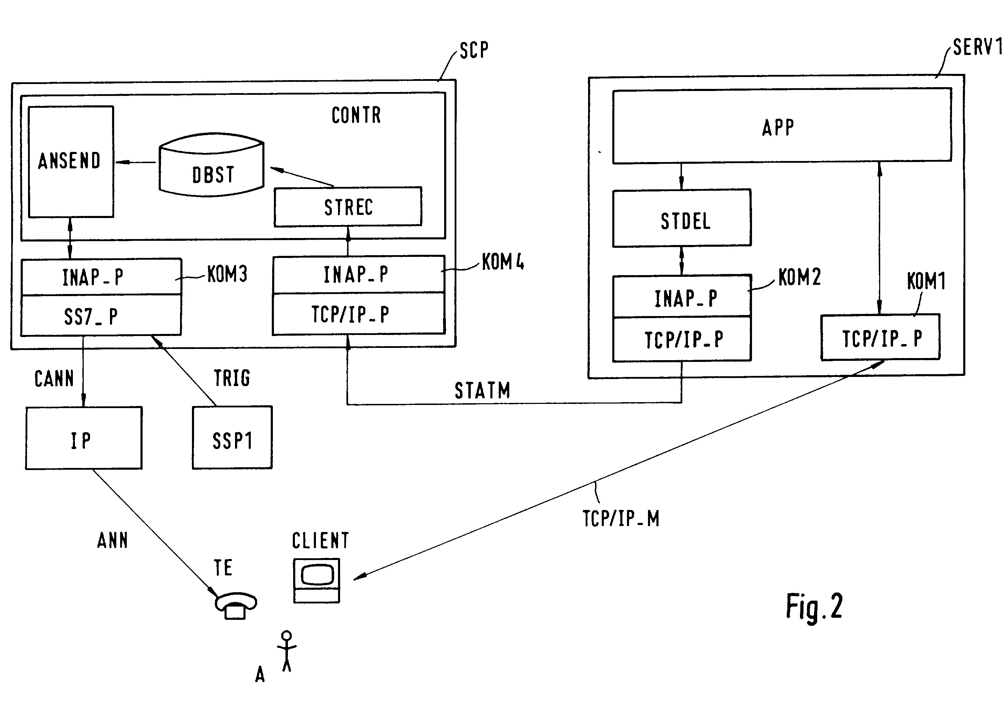

Ein erstes Ausführungsbeispiel der detaillierten Funktionsweise des Übermittlungsverfahrens, der Dienststeuereinheit SCP und des Server-Rechners SERV1 wird nun anhand von Fig. 2 erläutert.

Fig. 2 zeigt die Dienststeuereinheit SCP, den Server-Rechner SERV1, die Dienstvermittlungsstelle SSP1, das Dienstunterstützungssystem IP sowie das Fernsprechendgerät TE und den Client-Rechner CLIENT, die dem Teilnehmer A zugeordnet sind.

Der Server-Rechner SERV1 besteht aus einem Computer mit einer Systemplattform und Applikationen, die aus funktioneller Sicht u. a. zwei Kommunikationseinheiten KOM1 und KOM2 und zwei Steuereinheiten APP und STDEL realisieren.

Die Steuereinheit APP führt ein Anwendungsprogramm aus und stellt beispielsweise den Prozeß dar, der das Anwendungsprogramm ausführt. Das Anwendungsprogramm ist hierbei vorzugsweise eine Internet-Applikation, beispielsweise ein Programm, das dem Teilnehmer A einen Email Dienst bereitstellt (Email Server). Es könnte sich bei dem Anwendungsprogramm aber beispielsweise auch um ein Programm handeln, das einen Informationsdienst bereitstellt.

Die Kommunikationseinheit KOM1 unterstützt die Steuereinheit APP bei der Kommunikation mit anderen Rechnern des Rechnernetzes COMPNET. Sie weist hard- und softwaremäßigen Ressourcen TCP/IP_P zur Verarbeitung des TCP/IP Protokoll-Stacks auf. Über die Kommunikationseinheit KOM1 tauscht die Steuereinheit APP TCP/IP Nachrichten TCP/IP_M beispielsweise mit dem Server-Rechner CLIENT aus und erbringt so den von ihr bereitgestellten Dienst.

Die Kommunikationseinheit KOM2 unterstützt die Steuereinheit STDEL bei der Kommunikation mit der Dienststeuereinheit SCP des Fernsprechnetzes TNET. Sie weist hard- und softwaremäßigen Ressourcen TCP/IP_P zur Verarbeitung des TCP/IP Protokoll-Stacks und Ressourcen INAP_P zur Bearbeitung des INAP Protokolls auf. Über die Kommunikationseinheit KOM2 tauscht die Steuereinheit APP INAP-Nachrichten mit der Dienststeuereinheit SCP aus, die mittels des vom TCP/IP Protokoll bereitgestellten Übertragungsdienstes transportiert werden.

Die Steuereinheit STDEL ermittelt für ein oder mehrere Teilnehmer des Fernsprechnetzes TNET diejenigen Zustandsdaten des Anwendungsprogramms der Steuereinheit APP, die diesen gemäß einer Zuordnung zugeordnet sind und führt eine Zuordnung der ermittelten Zustandsdaten zu den ein oder mehreren Teilnehmern durch.

Die Zuordnung besteht aus einer Zuordnungsvorschrift, die bestimmte Zustandsdaten des Anwendungsprogramms bestimmten Teilnehmern des Fernsprechnetzes zuordnet. Für einen Teilnehmer zu ermittelnde Zustandsdaten sind beispielsweise das Ereignis, daß neue Email Nachrichten für einen Teilnehmer eingetroffen sind, die Anzahl der neuen Email Nachrichten, die Priorität der Email Nachrichten oder die Absender der neuen Email Nachrichten. Weitere Beispiele für solche Zustandsdaten sind beispielsweise das Ereignis, daß neue Informationen abrufbar sind das ,Themengebiet oder die Wertigkeit der neuen Informationen.

Die Ermittlung der Zustandsdaten ist hierbei dadurch realisiert, daß die Steuereinheit STDEL in regelmäßigen Abständen die von der Zuordnung den ein oder mehrere Teilnehmer zugeordneten Zustandsdaten von der Steuereinheit APP abfragt. Für jeden Teilnehmer sendet die Steuereinheit STDEL hierzu eine Abfrage an die Steuereinheit APP, die die dem Teilnehmer zugeordnete Benutzerkennung und die Art der abzufragenden Zustandsdaten gemäß der Zuordnung angibt. Die Angabe einer Benutzerkennung kann auch entfallen, wenn die Steuereinheit nur einen Dienst für einen einzigen Teilnehmer oder einen nicht personifizierten Dienst bereitstellt. Die auf die Abfrage von der Steuereinheit APP empfangen Zustandsdaten ordnet die Steuereinheit STDEL sodann demjenigen Teilnehmer zu, für den diese Abfrage gesendet worden war.

Die Benutzerkennung ist hierbei bereits in der Zuordnung enthalten oder die Steuereinheit STDEL verfügt über eine Liste, die die Teilnehmerkennungen der ein oder mehrere Teilnehmer Benutzerkennungen des Anwendungsprogramms zuordnet. Eine Teilnehmerkennung besteht aus der Telefonnummer eines Teilnehmers. Es kann sich bei einer Teilnehmerkennung aber auch um eine logische, endgerätunabhängige Teilnehmerkennung handeln, beispielsweise um eine UPT Kennung. Bei der Benutzerkennung handelt es sich um die Email-Adresse des Teilnehmers, es kann sich hierbei aber auch um ein von einem Operator oder vom Teilnehmer festgelegtes Kennwort handeln, mittels dem ein Client sich gegenüber dem Anwendungsprogramm ausweist.

Anstelle einer regelmäßigen Abfrage ist es natürlich auch möglich, daß die Steureinheit APP die Steuereinheit STDEL von der Änderung von Zustandsdaten benachrichtigt und die Steuereinheit STDEL sodann die Abfrage der Zustandsdaten startet. Es ist weiter möglich, daß die Zuordnung Benutzerkennung - Teilnehmerkennung erst in der Dienststeuereinheit SCP durchgeführt wird.

Eine weitere Möglichkeit der Ermittlung der Zustandsdaten besteht darin, daß die Steuereinheit STDEL die Steuereinheit APP überwacht, deren Zustandsdaten erfaßt und die dem oder den Teilnehmern gemäß der Zuordnung zugeordneten Zustandsdaten ausfiltert.

Eine weitere Möglichkeit der Ermittlung der Zustandsdaten besteht darin, daß die Steuereinheit von sich aus Zustandsdaten an die Steuereinheit STDEL sendet, die die Zustandsdaten dann anhand der mitgesendeten Informationen wie beispielsweise Benutzerkennungen gemäß der Zuordnung den Teilnehmern zuordnet.

Die Steuereinheit STDEL sendet die ermittelten Zustandsdaten mit Angabe des Teilnehmers, dem sie zugeordnet sind, sodann mittels der Kommunikationseinheit KOM2 an die Dienststeuereinheit SCP des Fernsprechnetzes TNET. Sie sendet somit beispielsweise eine Nachricht STATM, die eine Teilnehmerkennung und die hierzu ermittelten Zustandsdaten enthält. Das Senden einer solchen Nachrichten erfolgt, jedesmal wenn sich die für einen Teilnehmer herausgefilterten Zustandsdaten ändern. Es ist auch möglich, daß die einem Teilnehmer zugeordneten Zustandsdaten periodisch an die Dienststeuereinheit SCP gesendet werden.

Es ist auch möglich, daß die Steuereinheit STDEL Zustandsdaten für Teilnehmer verschiedener Fernsprechnetze ermittelt oder mit verschiedenen Dienststeuereinheiten des Fernsprechnetzes TNET zusammenarbeitet. In diesem Fall ermittelt die Steuereinheit in Abhängigkeit von der zugeordneten Teilnehmerkennung noch zusätzlich, zu welcher Dienststeuereinheit sie die ermittelten Zustandsdaten zu senden hat.

Die Dienststeuereinheit SCP besteht aus einem Computer mit einer Systemplattform und Applikationen, die zusammen mit dem Diensunterstützungssystem IP und den Dienstvermittlungsstellen SSP1 und SSP2 ein oder mehrere Dienste im Fernsprechnetz TNET bereitstellen. Der Dienst oder einer der Dienste stellt hierbei als Dienst die Übermittlung von Zustandsdaten eines von dem Server-Rechner SERV1 ausgeführten Anwendungsprogramms zur Verfügung. Aus funktioneller Sicht weist die Dienststeuereinheit SCP hierfür zwei Kommunikationseinheiten KOM3 und KOM4 und eine Steuereinheiten CONTR auf.

Die Kommunikationseinheit KOM4 entspricht in ihrer Funktionsweise der Kommunikationseinheit KOM2. Über die Kommunikationseinheit KOM4 kann die Steuereinheit CONTR INAP-Nachrichten mit Server-Rechnern des Rechnernetzes COMPNET austauschen, wobei dieses INAP- Nachrichten mittels des vom TCP/IP Protokoll bereitgestellten Übertragungsdienstes transportiert werden.

Die Kommunikationseinheit KOM3 stellt einen Kommunikationsdienst bereit, der die Kommunikation der Steuereinheit CONTR mit den Dienstvermittlungsstellen SSP1 und SSP2 sowie dem Dienstunterstützungssystem IP ermöglicht. Sie weist hard- und softwaremäßigen Ressourcen SS7/_P zur Verarbeitung des Protokoll-Stacks des Nr. 7 Signalisierungssystems und Ressourcen INAP_P zur Bearbeitung des INAP Protokolls auf. Über die Kommunikationseinheit KOM3 tauscht die Steuereinheit APP INAP-Nachrichten mit den Dienstvermittlungsstellen SSP1 und SSP2 sowie dem Dienstunterstützungssystem IP der Dienststeuereinheit aus, die mittels des vom Nr. 7 Signalisierungssystem bereitgestellten Übertragungsdienstes transportiert werden.

Die Steuereinheit CONTR empfängt Zustandsdaten von dem Server-Rechner SERV1 und veranlaßt das Senden von Meldungen mit den Zustandsdaten zu zugeordneten Fernsprechendgeräten des Fernsprechnetzes TNET. Die Steuereinheit CONTR weist zwei Steuereinheiten ANSEND und STREC sowie eine Datenbank DBST auf.

Die Steuereinheit STREC empfängt Nachrichten von dem Server-Rechner SERV1, in denen Zustandsdaten und ein diesen zugeordneter Teilnehmer des Fernsprechnetzes TNET, beispielsweise gekennzeichnet durch seine Teilnehmerkennung, eingetragen sind, und speichert diese in der Nachricht eingetragene Daten in der Datenbank DBST ab. Es ist hierbei auch möglich, daß die Steureinheit STREC solche Nachrichten von mehreren Server-Rechnern des Rechnernetzes COMPNET empfängt und Zustandsdaten von verschiedenen Anwendungsprogrammen, die von verschiedenen Server-Rechnern ausgeführt werden, von der Steuereinheit CONTR an Fernsprechendgeräte des Fernsprechnetzes TNET geleitet werden.

In der Datenbank DBST sind Zustandsdaten zugeordnet zu Teilnehmern abgespeichert. Empfängt die Steuereinheit Zustandsdaten für einen Teilnehmer, so werden die für den Teilnehmer bereits gespeicherten Zustandsdaten mit diesen aktuelleren Zustandsdaten überschrieben. Es ist natürlich auch möglich, daß Zustandsdaten bereits zugeordnet zu Endgerätekennungen von der Steuereinheit STREC abgespeichert werden, also bereits so zugeordnet von der Steuereinheit STREC empfangen werden oder die Steuereinheit STREC diese Zuordnung selbst vornimmt.

Die Steuereinheit ANSEND steuert das Senden von Meldung mit Zustandsdaten über das Fernsprechnetz TNET an Fernsprechendgeräte des Fernsprechnetzes TNET. Sie liest die einem Teilnehmer des Fernsprechnetzes TNET zugeordneten Zustandsdaten aus der Datenbank DBST aus, ermittelt ein diesem Teilnehmer zugewiesenes Fernsprechendgerät, beispielsweise das Endgerät TE, und sendet eine Steuernachricht CANN an das Dienstunterstützungssystem IP, die das Dienstunterstützungssystem IP veranlaßt, die Meldung ANN mit den ausgelesenen Zustandsdaten an das ermittelte Fernsprechendgerät zu senden. Wird als Teilnehmerkennung bereits eine Fernsprechrufnummer verwendet, so braucht das zugewiesen Endgerät natürlich nicht mehr ermittelt werden.

Das Auslesen und Senden der Zustandsdaten wird vom Zustand des dem zugeordneten Teilnehmer zugewiesenen Fernsprechendgerätes gesteuert: Hebt der Teilnehmer ab und geht das Endgerät somit in den Belegt-Zustand über, so wird diese Zustandsänderung von der zuständigen Dienstvermittlungsstelle, beispielsweise der Dienstvermittlungsstelle SSP1 erkannt und eine Trigger-Nachricht TRIG an die Steuereinheit ANSEND gesendet. Die Trigger-Nachricht TRIG enthält hierbei die Rufnummer dieses Endgerätes. Auf den Empfang der Trigger-Nachricht TRIG überprüft die Steuereinheit ANSEND, ob die Rufnummer einem Teilnehmer zugeordnet ist, für'-den in der Datenbank DBST Zustandsdaten abgespeichert sind. Trifft dies zu, so liest sie die zugeordneten Zustandsdaten aus und veranlaßt das Senden der Meldung ANN an dieses Fernsprechendgerät, beispielsweise an des Fernsprechendgerät TE.

Es ist auch möglich, daß das Auslesen und Senden von Zustandsdaten von anderen Ereignissen gesteuert wird. Eine Möglichkeit besteht darin, daß das Senden der Zustandsdaten auf eine Anforderungsnachricht von einem Fernsprechendgerät hin erfolgt. Eine weitere Möglichkeit besteht darin, daß das Senden der Zustandsdaten erfolgt, sobald neu Zustandsdaten für einen Teilnehmer von der Steuereinheit STREC empfangen werden. In diesem Fall könnte auf die Datenbank DBST verzichtet werden und es ist vorteilhaft, einen Anzeigetext als Meldung ANN an das Fernsprechendgerät zu senden.

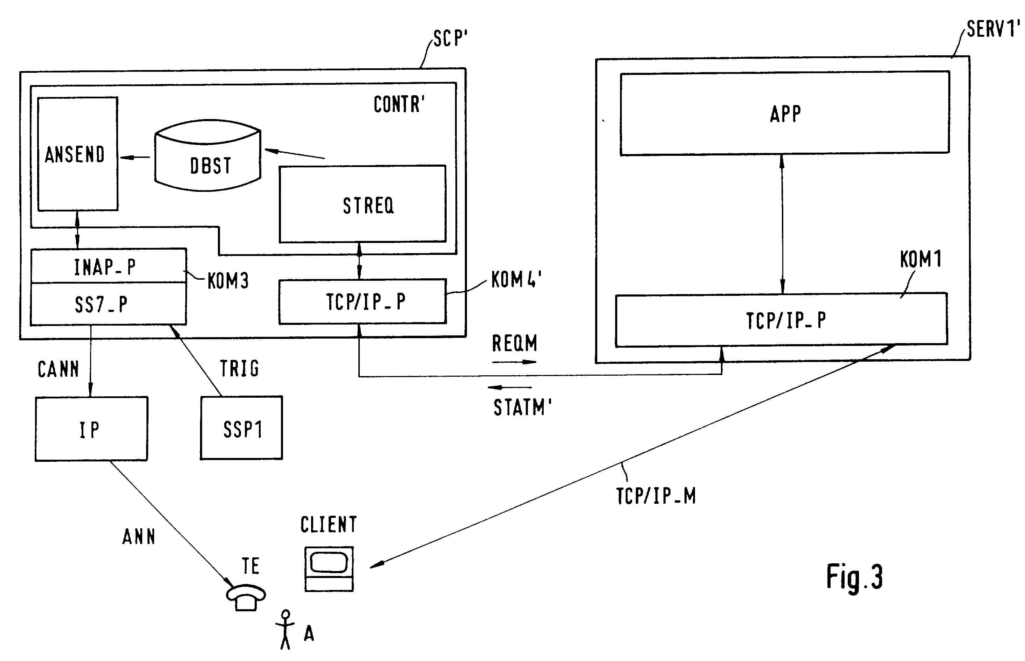

Ein zweites Ausführungsbeispiel der detaillierten Funktionsweise des Übermittlungsverfahrens, der Dienststeuereinrichtung SCP und des Server-Rechners SERV1 wird nun anhand von Fig. 3 erläutert.

Fig. 3 zeigt eine Dienststeuereinheit SCP', einen Server-Rechner SERV1', die Dienstvermittlungsstelle SSP1, das Dienstunterstützungssystem IP sowie das Fernsprechendgerät TE und den Client-Rechner CLIENT, die dem Teilnehmer A zugeordnet sind.

Der Server-Rechner SERV1' ist wie der Server-Rechner SERV1 aufgebaut, mit dem Unterschied, daß die Steuereinheit STDEL und die Kommunikationseinheit KOM2 fehlen. Die Dienststeuereinheit SCP' ist wie die Dienststeuereinheit SCP aufgebaut, mit dem Unterschied, daß die Steuereinheit STREC durch eine Steuereinheit STREQ und die Kommunikationseinheit KOM4 durch eine Kommunikationseinheit KOM4' ersetzt ist, wobei die Steuereinheiten ANSEND und STREQ sowie die Datenbank DBST nun eine Steuereinheit CONTR' bilden.

Die Kommunikationseinheit KOM4' entspricht in ihrer Funktionsweise der Kommunikationseinheit KOM1 : Sie stellt der Steuereinheit CONTR' einen Kommunikationsdienst zur Verfügung, über den sie Nachrichten mittels des vom TCP/IP Protokoll bereitgestellten Transportdienstes mit den Rechnern des Rechnernetzes COMPNET austauschen kann.

Die Steuereinheit STREQ ermittelt für ein oder mehrere Teilnehmer des Fernsprechnetzes TNET diejenigen Zustandsdaten des Anwendungsprogramms der Steuereinheit APP, die diesen gemäß einer Zuordnung zugeordnet sind, führt eine Zuordnung der ermittelten Zustandsdaten zu den ein oder mehreren Teilnehmern durch und speichert diese Daten in der Datenbank DBST ab.

Die Ermittlung der Zustandsdaten und die Zuordnung der ermittelten Zustandsdaten zu Teilnehmer wird hierbei von der Steuereinheit STREQ auf die prinzipiell gleiche Weise wie durch die Steuereinheit STDEL nach Fig. 2 durchgeführt:

Die Steuereinheit STREQ fragt in regelmäßigen Abständen die von der Zuordnung den ein oder mehrere Teilnehmer zugeordneten Zustandsdaten von der Steuereinheit APP ab, indem sie eine oder mehrere Anforderungsnachrichten REQM über die Kommunikationseinheiten KOM4' und KOM1 an die Steuereinheit APP richtet. Der Inhalt der Anforderungsnachrichten REQM entspricht hierbei dem der Abfragen der Steuereinheit STDEL nach Fig. 2. Auf den Empfang einer Anforderungsnachricht REQM sendet die Steuereinheit APP eine Antwort-Nachricht STATM', in der sie der Steuereinheit STREQ die angeforderten Zustandsdaten mitteilt. Die Steuereinheit STREQ ordnet die empfangenen Zustandsdaten sodann einem Teilnehmer des Fernsprechnetzes TNET zu und speichert diese Daten in der Datenbank DBST ab. Anstelle einer regelmäßigen Abfrage sind auch die bei der Steuereinheit STDEL nach Fig. 2 angeführten Alternative möglich.

Es ist auch möglich, daß die Steureinheit STREQ solche Zustandsdaten von verschiedenen Server-Rechnern des Rechnernetzes COMPNET anfordert.

## Patentansprüche

1. Verfahren zur Übermittlung von Zustandsdaten eines Anwendungsprogramms, das von einem Server-Rechner (SERV1; SERV1') eines Rechnernetzes (COMPNET) ausgeführt wird,
**dadurch gekennzeichnet**, daß diejenigen Zustandsdaten des Anwendungsprogramms, die gemäß einer Zuordnung einem bestimmten Teilnehmer (A) eines Fernsprechnetzes (TNET) zuzuordnen sind, ermittelt werden, daß die ermittelten Zustandsdaten von dem Server-Rechner (SERV1; SERV1') des Rechnernetzes an eine Dienststeuereinheit (SCP; SCP') des Fernsprechnetzes gesendet werden, und daß die Dienststeuereinheit (SCP; SCP') das Senden einer Meldung (ANN) mit den ermittelten Zustandsdaten über das Fernsprechnetz (TNET) an ein Fernsprechendgerät (TE) des bestimmten Teilnehmers (A) veranlaßt, dem die ermittelten Zustandsdaten gemäß der Zuordnung zugeordnet sind.

2. Verfahren nach Anspruch 1, dadurch gekennzeichnet, daß der Server-Rechner (SERV1) die Nachricht (STATM) mit den ermittelten Zustandsdaten an die Dienststeuereinheit (SCP) sendet, wenn sich die ermittelten Zustandsdaten ändern.

3. Verfahren nach Anspruch 1, dadurch gekennzeichnet, daß der Server-Rechner die Nachricht mit den ermittelten Zustandsdaten periodisch an die Dienststeuereinheit sendet.

4. Verfahren nach Anspruch 1, dadurch gekennzeichnet, daß die Dienststeuereinheit (SCP; SCP') die empfangenen Zustandsdaten zwischenspeichert, solange sie aktuell sind.

5. Verfahren nach Anspruch 1, dadurch gekennzeichnet, daß die Dienststeuereinheit (SCP; SCP') das Senden der Meldung (ANN) an das Fernsprechendgerät (TE) veranlaßt, wenn das Fernsprechendgerät zur Benutzung aktiviert wird.

6. Verfahren nach Anspruch 1, dadurch gekennzeichnet, daß die Dienststeuereinheit das Senden der Meldung an das Fernsprechendgerät aufgrund einer Anforderungsnachricht vom Fernsprechendgerät veranlaßt.

7. Verfahren nach Anspruch 1, dadurch gekennzeichnet, daß die Dienststeuereinheit periodisch das Senden der Meldung an das Fernsprechendgerät veranlaßt.

8. Verfahren nach Anspruch 1, dadurch gekennzeichnet, daß eine Sprachansage als Meldung (ANN) an das Fernsprechendgerät (TE) gesendet wird.

9. Verfahren nach Anspruch 1, dadurch gekennzeichnet, daß ein Anzeigetext als Meldung an das Fernsprechendgerät gesendet wird.

10. Verfahren nach Anspruch 1, dadurch gekennzeichnet, daß die Meldung (ANN) von einem Dienstunterstützungssystem (IP) erzeugt wird.

11. Server-Rechner (SERV1) mit einer ersten Kommunikationseinheit (KOM1) zur Kommunikation mit Rechnern (SERV2, CLIENT) eines Rechnernetzes (COMPNET) und mit einer ersten Steuereinheit (APP) zur Ausführen eines Anwendungsprogramms,
**dadurch gekennzeichnet**, daß der Server-Rechner (SERV1) mit einer zweiten Kommunikationseinheit (KOM2) zur Kommunikation mit einer Dienststeuereinheit (SCP) eines Fernsprechnetzes (TNET) und mit einer zweiten Steuereinheit (STDEL) versehen ist, die so ausgestaltet ist, daß sie diejenigen Zustandsdaten des Anwendungsprogramms, die gemäß einer Zuordnung einem bestimmten Teilnehmer des Fernsprechnetzes zuzuordnen sind, ermittelt und das Senden der ermittelten Zustandsdaten von dem Server-Rechner (SERV1) des Rechnernetzes (COMPNET) an die Dienststeuereinheit (SCP) des Fernsprechnetzes (TNET) veranlaßt.

12. Server-Rechner (SERV1) nach Anspruch 1 1, dadurch gekennzeichnet, daß der Server-Rechner ein Internet-Server-Rechner ist und mit den Rechnern des Rechnernetzes (COMPNET) über das Internet (DATNET) verbunden ist.

13. Dienststeuereinheit (SCP; SCP') zur Bereitstellung von einem oder mehreren Diensten in einem Fernsprechnetz (TNET),
**dadurch gekennzeichnet**, daß die Dienststeuereinheit (SCP; SCP') mit einer Kommunikationseinheit (KOM4; KOM4') zur Kommunikation mit einem Server-Rechner (SERV1; SERV1') eines Rechnernetzes (COMPNET) und mit einer Steuereinheit (CONTR, CONTR') versehen ist, die so ausgestaltet ist, daß sie von dem Server-Rechner (SERV1; SERV1') des Rechnernetzes Zustandsdaten eines Anwendungsprogramms, das von dem Server-Rechner (SERV1; SERV1') ausgeführt wird, empfängt und das Senden einer Meldung (ANN) mit den empfangenen Zustandsdaten über das Fernsprechnetz (TNET) an ein Fernsprechendgerät (TE) eines Teilnehmers des Fernsprechnetzes veranlaßt, dem die Zustandsdaten gemäß einer Zuordnung zuzuordnen sind.

14. Dienststeuereinheit (SCP; SCP') nach Anspruch 13, dadurch gekennzeichnet, daß die Dienststeuereinheit (SCP; SCP') mit einer oder mit mehreren Dienstvermittlungsstellen (SSP1, SSP2) des Fernsprechnetzes (TNET) verbunden ist.

15. Dienststeuereinheit nach Anspruch 13, dadurch gekennzeichnet, daß die Dienststeuereinheit in eine Vermittlungsstelle des Fernsprechnetzes integriert ist.
